# EUROPEAN PATENT SPECIFICATION

(11) **EP 0 314 244 B1**
(45) Date of publication and mention of the grant of the patent: **07.04.1993**
(21) Application number: 88202360.9
(22) Date of filing: 21.10.1988
(51) Int. Cl.: D04H 1/42

(54) **Flame retarding and fire blocking carbonaceous fiber structures and methods of manufacture**
Kohlenstoffhaltige Fasern enthaltende, flammfeste und feuerhemmende Strukturen und Verfahren zur Herstellung derselben
Structures contenant des fibres carbonées retardant la flamme et antifeu, et procédés pour leur fabrication

(30) Priority: 28.10.1987 US 114324
(43) Date of publication of application: 03.05.1989
(73) Proprietor: THE DOW CHEMICAL COMPANY, Midland Michigan 48640-1967 (US)
(72) Inventor: McCullough, Francis P., Jr., Lake Jackson Texas 77566 (US); Snelgrove, R. Vernon, Damon Texas 77430 (US); Hale, Frank W., Lake Jackson Texas 77566 (US); Hall, David M., Auburn Alabama 36830 (US)
(74) Representative: Smulders, Theodorus A.H.J., Ir.

(56) References cited:
- EP-A- 0 079 808
- EP-A- 0 199 567
- US-A- 4 726 987

## Description

The present invention relates to flame retarding and fire blocking structures, methods of manufacture, and articles made from such structures, including woven or nonwoven fabrics, clothing articles, panels, and coverings for polymeric foam structures. The flame and fire retarding structures comprise a blend of substantially permanent and irreversibly heat set, nonflammable, carbonaceous fibers and a polymeric material.

The use of felts made from asbestos, carbon and graphite using short and straight staple fibers, as well as various ceramic materials, particularly ceramic foams, as thermal insulation having fire blocking properties, is generally known. The bulk densities of some of the well-known thermal insulating materials are in the range of from 5.6 to 32 kg/m³ for insulating materials useful at temperatures not exceeding 120°C, and from 32 to 80 kg/m³ for insulating materials used at temperatures of up to 1650°C. Even the newest "lightweight" insulating material comprising a ceramic from which a carbonaceous material has been burned out has a bulk density of from 32 to 96 kg/m³. In addition, with the possible exception of fiberglass which may be used under certain conditions as a fire blocking material, the commonly known thermal insulating materials having fire blocking properties, such as carbon or graphite felts and ceramic materials, do not have any resiliency, i.e., they do not have the ability to recover from compression (spring back) of the original "loft". Further, these prior art materials are not compressible from their original loft to any great degree since substantially straight or linear fibers do not have any substantial spacial distance between the individual fibers. Accordingly, there is very little loft between linear fibers and, correspondingly, there is substantially no compressibility between the fibers.

Both government and industry have conducted extensive research into developing structures or fabrics that would either be nonflammable or at least retard the propagation of a fire. In conjunction with finding an effective material to act as a fire barrier, consumer considerations require such materials to be functional, aesthetically acceptable and reasonably priced.

Unfortunately, past efforts to develop a suitable fire barrier have not been very effective. Thus, even fabrics that will not ignite from, for example, a smoldering cigarette and that are considered to be Class 1 fabrics under the UFAC upholstery fabric classification test, will burn when placed in contact with an open flame. Consequently, this leads to the ignition of any underlying material, such as a cushion or mattress.

So-called fire retardant foam coatings for draperies, liners and backcoatings for upholstery, as well as chemical treatments for apparel fabrics, that attempt to provide a fire retardant quality to the fabric are commercially available. Unfortunately, these materials are, at best, self extinguishing only when the source of the flame is removed. If the flame source is not removed, these materials will char, lose their integrity and, most importantly, will not prevent the flame from reaching materials underneath the fabric covering which act as a major source of fuel for the fire.

Other attempts at solving the flammability problem have centered on the use of inherently nonflammable fabrics such as fiberglass which can be used, for example, in draperies. It has been discovered, however, that the glass fibers are self-abrasive in that they rub against each other thereby becoming self-destructing due to such abrasive action. Thus, to reduce abrasive action, hand washing and line drying is, out of necessity, the recommended cleaning procedure for such fabrics. Moreover, the relatively brittle glass fibers tend to break and become very irritating to the skin thus rendering many of the applications of the fabric unsuitable where there is extensive skin contact. Fiberglass fabrics usually also contain flammable sizing binders and/or finishes to provide an aesthetic appearance to the fabric.

Consequently, there is a need for structures such as, for example, woven or knitted fabrics, battings, webs, and the like, which not only provide fire shielding properties, but also are washable, lightweight and can be fabricated into aesthetically acceptable fabrics for home and commercial use.

U.S. Patent No. 4,588,635 to James G. Donovan discloses a lightweight thermal insulation material which is a blend of spun and drawn, crimped, staple, synthetic polymeric fibers having a diameter of from 3 to 12 microns, and synthetic polymeric staple fibers having a diameter of greater than 12 and up to 50 microns. However, the insulation material is flammable.

U.S. Patent No. 4,167,604 to William E. Aldrich discloses the use of crimped hollow polyester filaments in a blend with fowl down (e.g., duck or goose down) in the form of a multiple ply carded web which is treated with a thermosetting resin to form a batting having thermal insulating characteristics. The web, however, does not have fire retarding characteristics.

U.S. Patent No. 4,321,154 to Francois Ledru relates to a high temperature thermal insulating material comprising insulating material fibers and pyrolytic carbon. To make the insulation lightweight, an expanding agent is utilized that is composed of hollow particles such as microspheres.

European Patent Application Serial No. 0199567, published October 29, 1986, to F. P. McCullough, et al entitled, "Carbonaceous Fibers with Spring-Like Reversible Deflection and Method of Manufacture," discloses nonflammable, carbonaceous fibers that are suitably employed in the structures of the present invention.

The carbonaceous fibers that are suitably employed in the present invention have an LOI value of greater than 40, as determined by test method ASTM D2863-77. The test method is also known as "Oxygen Index" or "Limited Oxygen Index" (LOI). With this procedure the concentration of oxygen in O₂/N₂ mixtures is determined at which a vertically mounted specimen is ignited at its upper end and just continues to burn. The size of the specimen is 0.65 x 0.3 cm with a length of from 7 to 15 cm. The LOI value is calculated according to the equation:

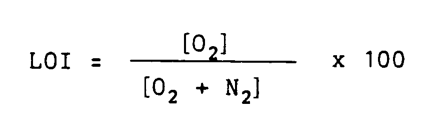

The LOI values of different natural and synthetic fibers are as follows:

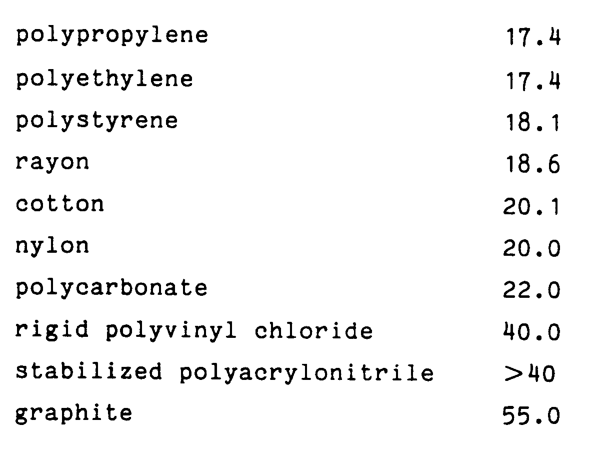

For the purpose of rendering various terms employed herein clear and readily understandable, the following definitions are provided hereinafter.

The term "stabilized" herein applies to carbonaceous precursor fibers which have been oxidized at a specific temperature, typically less than about 250°C for acrylic fibers. It will be understood that in some instances the fibers are oxidized by chemical oxidants at lower temperatures. The procedure is more clearly described in the aforementioned European published Patent Application Serial No. 0199567.

The term "reversible deflection" as used herein applies to a helical or sinusoidal compression spring. Particular reference is made to the publication, "Mechanical Design - Theory and Practice," Macmillan Publishing Co., 1975, pp to 748, particularly Section 14-2, pp 721 to 724 as well as the herein before mentioned European published Application Serial No. 0199567.

The term "polymer" or "polymeric material" used herein applies to organic polymers as defined in Hawley's Condensed Chemical Dictionary, Eleventh Edition, Published by Van Nostrand Rheinhold Company. The organic polymers generally include: 1) natural polymers, such as cellulose, and the like; 2) synthetic polymers, such as thermoplastic or thermosetting elastomers; and 3) semisynthetic cellulosics. Polymers included herein are also low melting polymeric binders having a melt temperature of less than 121°C as well as polymeric fibers.

The term "permanent" or "irreversibly heat set" used herein applies to nonlinear carbonaceous fibers which have been heat treated until they possess a degree of irreversibility where the fibers, when stretched to a substantially linear shape, without exceeding their internal tensile strength, will not revert to their nonlinear configuration once the stress on the fiber is released. Such fibers are more particularly described in the aforementioned European published Application Serial No. 0199567.

All percentages hereinafter referred to are in percent by weight.

In accordance with the present invention there is provided a fire retarding and fire blocking structure comprising a blend of a polymeric material and nonflammable, substantially irreversibly heat set, carbonaceous fibers having a specific resistivity of greater than 10⁻¹ ohms/cm and an LOI value of greater than 40, and wherein said carbonaceous fibers are present in said blend in an amount of at least 7.5 percent.

The present invention also provides a method of making a fire shield for a structural part comprising the steps of providing a layer of an intimate blend of a polymeric material and at least 7.5 percent nonflammable, substantially irreversibly heat set carbonaceous fibers having an LOI value of greater than 40.

The fire retarding and fire blocking structure of the invention is particularly employed as woven or nonwoven fabrics, clothing articles, covers for polymeric foam articles such as seat cushions, fire shields or panels.

Advantageously, the carbonaceous fibers are derived from carbonaceous polymeric fibers or pitch based fibers. Preferably, the carbonaceous fibers are nonlinear, resilient, shape reforming, and have a reversible deflection ratio of greater than 1.2:1, preferably greater than 2:1. The nonlinear fibers have been found to provide considerable loft and improved thermal insulating properties to structures and/or fabrics utilizing them. The nonlinear fibers also provide a porosity which inhibits the spread of fire.

It has also been discovered that the carbonaceous fibers, when intimately blended with polymeric fibers to form a structure, such as a tow, yarn, web, wool-like fluff, batting, fabric, or the like, a surprising synergistic effect is obtained with respect to the fire blocking and fire retarding properties of the blend. It is understood that when the structure is densified (i.e., compressed to form a structure having a higher density as compared to an uncompressed structure) for a particular use, it is preferable to use a higher amount of carbonaceous fibers.

It is therefore a particular object of the invention to provide such structures comprising an intimate blend of from 25 to 75 percent carbonaceous fibers and a polymeric material, wherein the polymeric material is a polymeric binder having a softening temperature of less than 450°C.

It is a further object of the invention to provide a covering for a polymeric foam structure comprising a blend of a polymeric material and from 15 to 75 percent nonflammable, substantially irreversibly heat set, carbonaceous fibers having an LOI value of greater than 40 and a specific resistivity of greater than 10⁻¹ ohms/cm. Such covering is fire retarding and provides a fire barrier, and also possesses good handling and washing characteristics.

It is another object of the invention to provide a woven or nonwoven fabric comprising a blend of a polymeric material and from 7.5 to 40 percent nonflammable, substantially irreversibly heat set carbonaceous fibers having an LOI value of greater than 40 and a carbon content of greater than 65 percent.

It is a further object of the invention to provide a clothing article comprising a blend of a polymeric material and from 7.5 to 20 percent nonflammable, substantially irreversibly heat set carbonaceous fibers having an LOI value of greater than 40, a specific resistivity of greater than 10⁻¹ ohms/cm, and an electrical resistance of greater than 4 x 10⁶ ohms/cm. The polymeric materials preferably are comprised of polymeric fibers. The clothing article has good handling and washing characteristics, is aesthetically pleasing, and possesses excellent fire blocking characteristics.

It is yet another object of the invention to provide a fire shield comprising a blend of a polymeric material and from 7.5 to 80 percent nonflammable, substantially irreversibly heat set carbonaceous fibers having an LOI value of greater than 40 and a carbon content of greater than 65 percent. The fire shield of the invention is advantageously employed with another structural part or a pair of adjacent structural parts.

It is also an object of the invention to provide a fire retarding and fire blocking structure comprising a blend of a polymeric material and carbonaceous fibers, wherein said carbonaceous fibers are substantially graphitic, are irreversibly heat set, nonlinear, resilient, shape reforming and elongatable, have a reversible deflection ratio of greater than 1.2:1, an aspect ratio of greater than 10:1, an LOI value of greater than 40, an electrical resistance of less than 4 x 10³ ohms/cm and a specific resistivity of less than 10⁻¹ ohms/cm, and wherein said carbonaceous fibers are present in the blend in an amount of greater 20 percent.

A particular object of the invention resides in a fire blocking panel comprising a compression formed composite of a thermoplastic or thermosetting resin matrix containing from 10 to 95 percent by weight of nonflammable, substantially irreversibly heat set carbonaceous fibers having an LOI value of greater than 40 and a carbon content of greater than 65 percent.

A further object of the invention resides in a method of making a fire shield for a structural part comprising the steps of providing a layer of an intimate blend of a polymeric material and at least 7.5 percent nonflammable, substantially irreversibly heat set carbonaceous fibers having a carbon content of greater than 65 percent, a nitrogen content of from 5 to 35 percent, and an LOI value greater than 40.

Another object of the invention resides in a method for improving the flame retarding and fire blocking characteristics of a fiber tow comprising the steps of blending into said fiber tow at least 7.5 percent of nonflammable, substantially irreversibly heat set carbonaceous fibers having a carbon content of greater than 65 percent, a nitrogen content of from 5 to 35 percent, and an LOI value greater than 40.

Significant improvements are achieved when the carbonaceous fibers are nonlinear. However, both linear and nonlinear carbonaceous fibers can be utilized in the present invention. When the carbonaceous fibers are nonlinear, the loft and the shape reforming characteristics of a wool-like structure, fabric or batting, which contains the blend of fibers, is maintained even after long periods of compression. It is understood that the greater the amount of nonlinear carbonaceous fibers which are utilized, the greater will be the shape reforming and fire retarding characteristics of the structure. An amount of up to 92.5 percent of nonlinear carbonaceous fibers may be utilized in the blend. Additional benefits are not derived from employing higher amounts. Preferably, the carbonaceous fibers are present in the blend in an amount of from 10 to 80 percent, more preferably from 20 to 60 percent. Advantageously, when linear carbonaceous fibers are used, they are present in the blend in an amount of at least about 15 percent.

The polymeric fibers may also be linear or nonlinear. However, the nonlinear carbonaceous fibers are irreversibly heat set, resilient, and shape retaining so that the structure permanently maintains a degree of loft and porosity to provide good hand even when the other fibers lose their nonlinearity.

The nonlinear carbonaceous fibers which are utilized may have a sinusoidal and/or a coil-like configuration depending upon the ultimate use of the fibers. Fibers that are derived from nitrogen containing polymers such as an acrylic based polymer have a nitrogen content of from 5 to 35 percent, preferably from 16 to 25 percent, most preferably from 18 to 20.

In accordance with one embodiment of the invention, the carbonaceous fibers are opened and then blended with polymeric fibers, i.e., either synthetic or natural fibers or both, to form a fiber mixture or blend. The carbonaceous fibers, when in the form of a wool-like fluff or batting, have a bulk density of from 6.4 to 96 kg/m³. A blend of at least 7.5 percent of the carbonaceous fibers with other polymeric fibers and having a bulk density of from 6.4 to 9.6 kg/m³ is preferred.

The blend of carbonaceous fibers and other polymeric fibers may be formed into a carded web employing conventional carding equipment which is well known to persons skilled in the art. The carding operation serves to uniformly blend the carbonaceous fibers and other staple fibers. The carded web will ordinarily have a thickness in the range of up to about 5 cm, but may be built up in multiple plies to produce a web having a thickness of 25 cm or more depending upon the desired end use of the material.

A blend of fibers may be utilized in order to form fabrics having fire retarding characteristics. For example, a blend of fibers comprising at least 7.5 to 20 percent of the carbonaceous fibers may be utilized to manufacture fire retardant articles such as clothing, blankets, sleeping bags, and the like. Such fabric articles have excellent washability and shape retaining characteristics, especially when a large proportion of from 30 to 50 percent nonlinear carbonaceous fibers is employed. Carbonaceous fibers having a nitrogen content of from 16 and 20 percent are especially useful for fabrics making skin contact with the wearer.

Fabric structures which contain the carbonaceous fibers in amounts of from 7.5 to 40 percent may advantageously be used for seat coverings in upholstery, battings in seat covers, curtains, and the like.

Use of carbonaceous fibers in the blends in amounts of up to 92.5 percent improve the fire blocking and fire shielding characteristics of the structures. Structures having greater amounts of carbonaceous fibers also have greater chemical resistance. The structures may be used as filters, hose coverings, static precipitators, and the like. However, it is desirable to maintain fabric characteristics that are close to conventional fabrics to provide for a pleasing aesthetic appearance and feel.

The fabrics may comprise a blend of all natural fibers, all synthetic polymeric fibers, or a combination of both together with the carbonaceous fibers.

A synergistic flame retarding effect is found when the carbonaceous fibers are used in a blend with natural fibers such as cotton, wool, flax, silk, or mixtures thereof.

The synthetic polymeric fibers which can be utilized to form a blend with the carbonaceous fibers include, for example, polyolefins, such as polyethylene, polypropylene, and the like, polyvinyl chloride, polyvinyl alcohol, polyesters, polyacrylonitrile, polyacrylates, polycarbonate, cellulosic products, ionomers, DACRON™ and KEVLAR™ (both are trademarks of E. I. de Pont de Nemours & Co., Inc.), and the like. It is to be understood, of course, that a blend of natural and/or synthetic polymeric fibers with the carbonaceous fibers may be used.

The precursor stabilized acrylic fibers which are advantageously utilized in preparing the carbonaceous fibers are selected from acrylonitrile homopolymers, acrylonitrile copolymers and acrylonitrile terpolymers.

The copolymers and terpolymers preferably contain at least about 85 mole percent of acrylic units, preferably acrylonitrile units, and up to 15 mole percent of one or more monovinyl units copolymerized with styrene, methylacrylate, methyl methacrylate, vinyl chloride, vinylidene chloride, vinyl pyridene, and the like.

Preferred precursor materials are prepared by melt spinning or wet spinning the precursor materials in a known manner to yield a monofilament or multifilament tow. The fibers are formed into a manufactured structure such as a yarn, woven fabric or knitted cloth, and the like, by any of a number of commercially available techniques. The structure is then heated, preferably to a temperature above about 525°C in a nonoxidizing atmosphere, and thereafter deknitted or disassembled and carded to produce a wool-like fluff which may be laid up in batting-like form.

A first group of carbonaceous fibers that are thus produced can be classified as being electrically nonconductive and to possess no antistatic characteristics, i.e. they do not have the ability to dissipate an electrostatic charge.

The term "electrically nonconductive" as utilized in the present invention relates to fibers having an electrical resistance of greater than 4 x 10⁶ ohms/cm when measured on a 6K tow (6000 filaments) formed from precursor fibers having a diameter of from 4 to 25 microns. Such fibers have a specific resistivity of greater than 10⁻¹ ohms/cm. The specific resistivity is calculated from measurements as described in the aforementioned published European Patent Application Serial No. 0199567.

When the precursor fiber is an acrylic fiber it has been found that a nitrogen content of greater than 18 percent results in a nonconductive fiber.

In a second group, the carbonaceous fibers are classified as being partially electrically conductive (i.e., having low conductivity) and having a carbon content of less than 85 percent. Low conductivity means that the fibers have a resistance of from 4 x 10³ to 4 x 10⁶ ohms/cm, as determined by the measurements hereinbefore specified. Preferably, the carbonaceous fibers are derived from stabilized acrylic fibers and possess a percentage nitrogen content of from 16 to 20 percent for the case of a copolymer acrylic fiber, more preferably from 18 to 20 percent. The structures formed therefrom are lightweight, have low moisture absorbency, good abrasive strength together with good appearance and handle.

In a third group are fibers having a carbon content of at least 85 percent. These fibers are characterized as being highly electrically conductive. That is, the fibers are substantially graphitic and have an electrical resistance of less than 4 x 10³ ohms/cm and a nitrogen content of less than 5 percent. Correspondingly, the specific resistivity of the fibers is less than 10⁻¹ ohms/cm. Such fibers are useful in applications where electrical grounding or shielding are also desired.

Exemplary of the structures of the present invention are those set forth in the following examples.

### Example 1

A. Battings were made by blending an appropriate percentage of each respective opened fiber in a blender/feed section of a sample size 30 cm Rando Webber Model B (manufactured by Rando Machine Corp. of Macedon, New York). The battings thus produced typically were about 2.5 cm thick and had a bulk density in the range of from 6.4 to 96 kg/m³. The battings were thermally bonded by passing it on a conveyor belt through a thermal bonding oven at a temperature of about 150°C.

Flammability tests were run in a standard testing apparatus as cited in FTM 5903 according to the procedure of FAR 25.8536 9 which references FTM 59030. The results are shown in the following Table I:

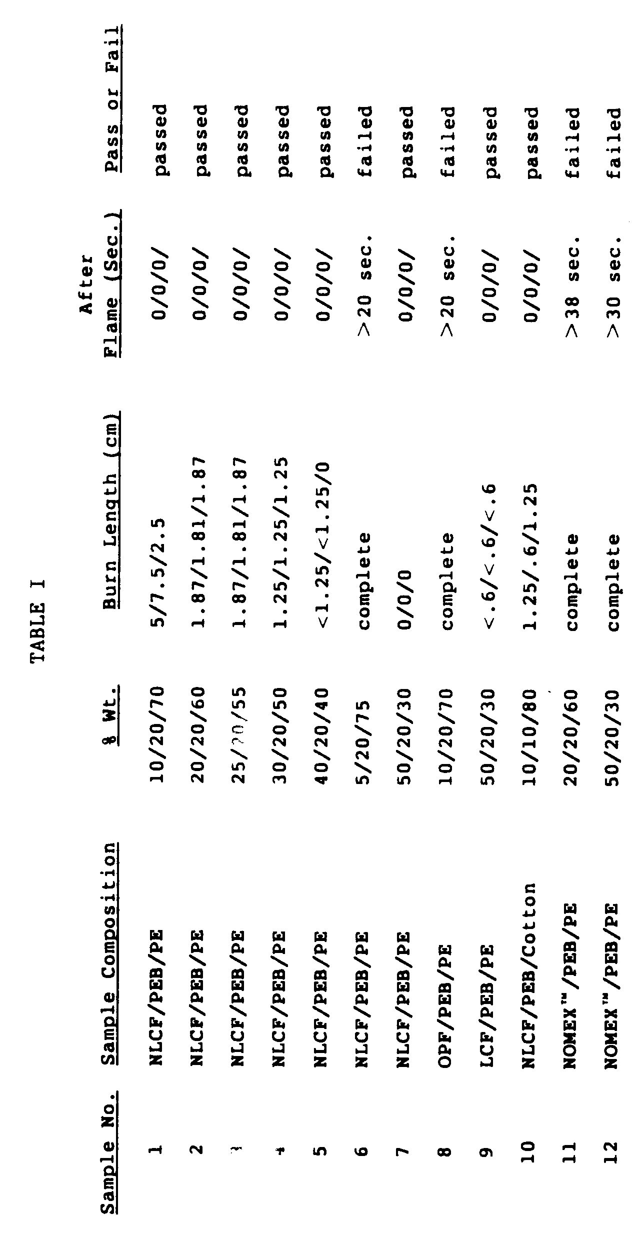

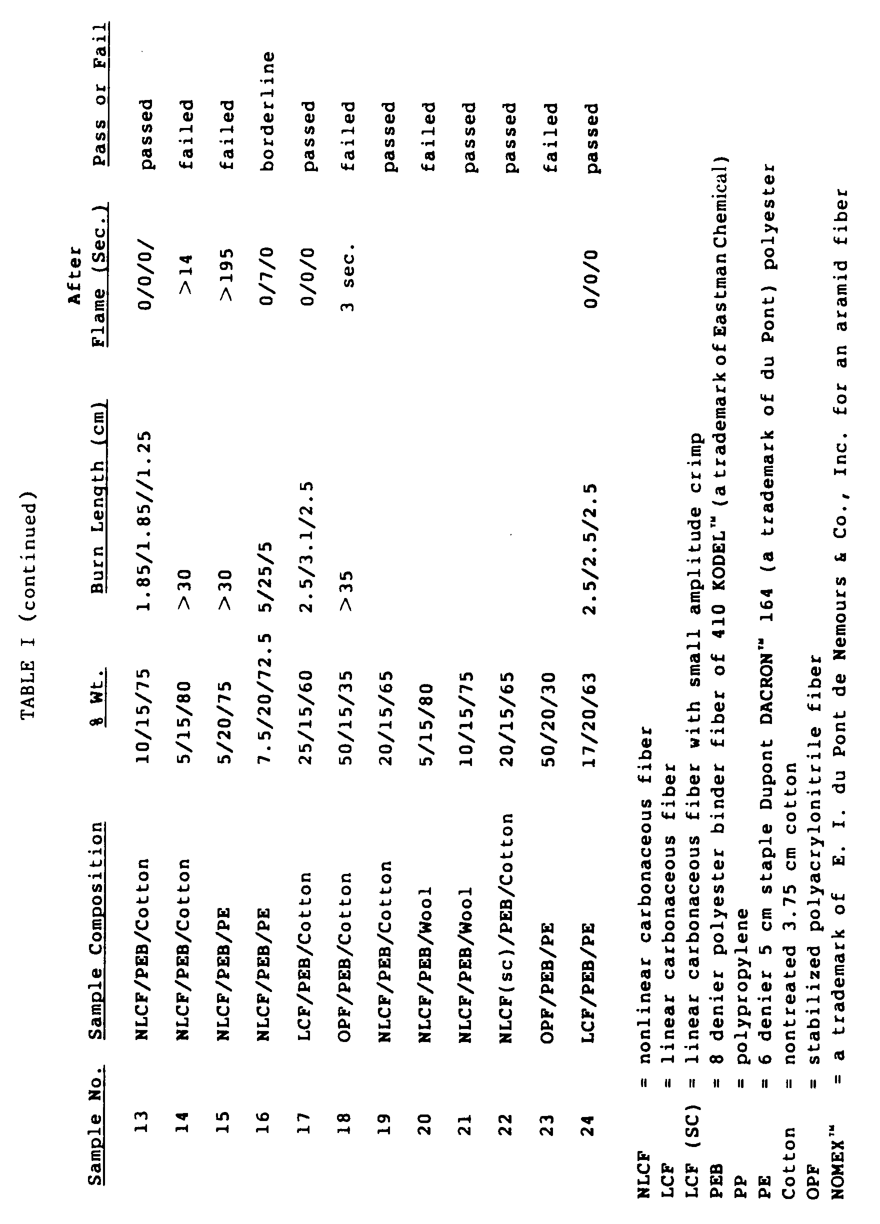

The foregoing table shows surprisingly that use of as little as 7.5 percent by weight of nonlinear carbonaceous fibers in the blends resulted in substantially no after flame and no flame drippings when the flame source was removed.

### Example 2

Following the procedure of Example 1, similar tests were performed and the results are shown in the following Table II:

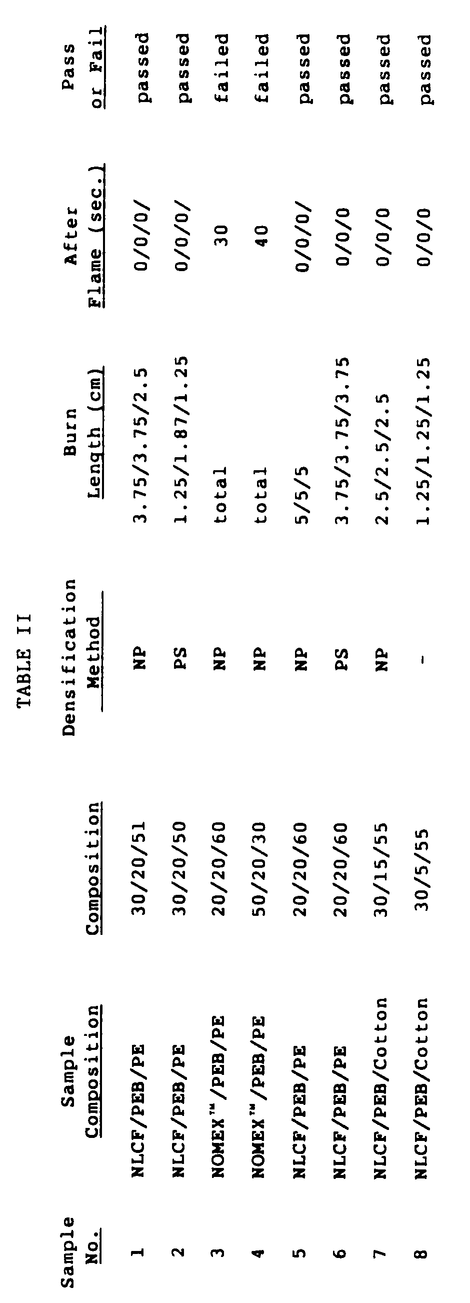

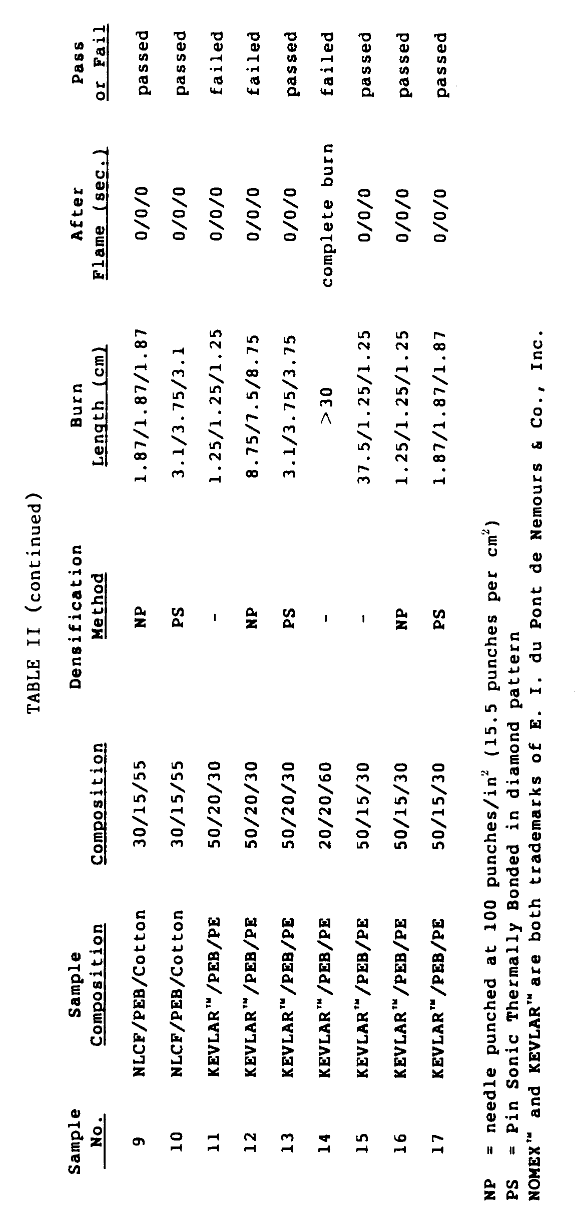

### Example 3 - Nonflammability Test

The nonflammability of the fabric of the invention was determined following the test procedure set forth in 14 CFR 25.853(b). The test was performed as follows:
A minimum of three 2.5 cm x 15 cm x 30 cm specimens comprised of 10 percent carbonaceous fiber, 10 percent polyethylene and 80 percent cotton, were conditioned by maintaining the specimens in a conditioning room maintained at temperature of 21°C ± 5°C and 50 percent ± 5 percent relative humidity for 24 hours preceding the test.

Each specimen was supported vertically and exposed to a Bunsen or Turill burner with a nominal I.D. tube adjusted to give a flame of 3.8 cm in height. The minimum flame temperature measured by a calibrated thermocouple pyrometer in the center of the flame was 843°C. The lower edge of the specimen was 1.9 cm above the top edge of the burner. The flame was applied to the center line of the lower edge of the specimens for 12 seconds and then removed.

Pursuant to the test, the material was self-extinguishing. The average burn length did not exceed 20 cm. The average after flame did not exceed 15 seconds, and there were no flame drippings.

Similar results may be achieved if the carbonaceous fiber is either derived from an acrylic precursor or a pitch based fiber.

The present invention is also directed to a fire shielding composition of a compressed fiber reinforced composite material comprising a polymeric matrix and a multiplicity of carbonaceous fibers. The polymeric matrix may comprise a thermoplastic or a heat cured thermosetting resin.

In accordance with one embodiment of the invention, the composites of the invention are prepared by the compression of a thermoplastic or thermosetting resin together with a batting or fluff of carbonaceous fibers. The composite may be cold compressed or the combination of heat and compression may be utilized depending upon the resin. Advantageously, the compression results in fibers being on the surface of the composite. The panels of the invention may comprise one or more composites laminated together to form a single unit.

Another embodiment of the invention comprises a structure wherein the carbonaceous fibers are on one or more sides of the panel to provide sound and thermal insulation.

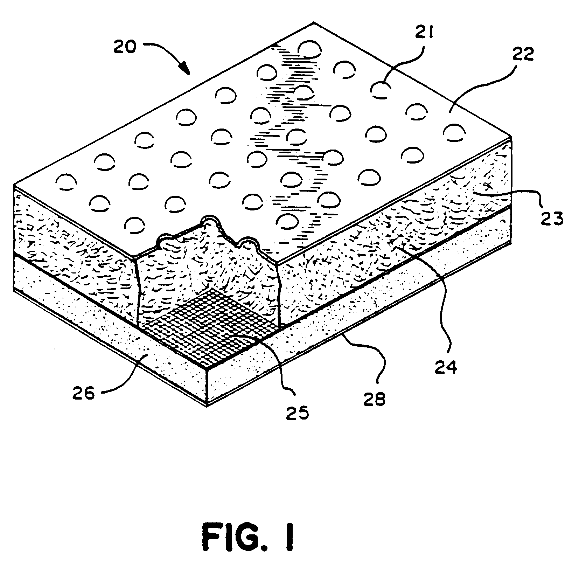

Figure 1 is a perspective view of a structure member of the invention with a sound absorbing barrier layer.

The composite of this invention will be useful particularly in forming fire retardant or fire shielding structural panels for use in vehicles such as automobiles or airplanes, building structures, particularly commercial buildings such as hospitals and high rise office buildings.

Advantageously, the composites of the present invention contain from 10 to 95 percent by weight of carbonaceous fibers preferably from 20 to 75 percent by weight of composite.

The polymeric materials used in the composites of the present invention may be selected from any of the conventional type materials such as thermoplastic resins and thermosetting resins.

Thermoplastic resins, for example, may include polyethylene, ethylenevinyl acetate copolymers, polystyrene, polyvinyl chloride, polyvinyl acetate, polymethacrylate, acrylonitrile-butadiene-styrene copolymers (ABS), polyphenylene oxide (PPO), a halo group modified PPO, polycarbonate, polyacetal, polyamide, polysulfone, polyether sulfone, polyolefins, polyacrylonitrile, polyvinylidene chloride, polyvinyl acetate, polyvinyl alcohol, polyvinyl pyrrolidone, ethyl cellulose, polyvinyl chloridevinyl acetate copolymer, polyacrylonitrile-styrene copolymer, polyacrylonitrile-vinyl chloride copolymer, carboxymethylcellulose, and the like polyparaxylene, polyimide, polyamide-imide, polyester imide, polybenzimidazole, polyoxadiazole, and the like.

Thermosetting resins, for example, may include phenolic resins, urea resins, melamine resins, alkyd resins, vinyl ester resins, polyester resins, xylene resins, furanic resins, and the like.

Other suitable resinous materials are disclosed in Modern Plastic Encyclopedia, 1984-1985, Vol. 61, No. 10A, McGraw-Hill, New York, New York.

The composite of the invention in its simplest form may consist of a panel member comprising a composite of a polymeric matrix with carbonaceous fibers having a plastic or metallic film or sheet which may form a vapor barrier or decorative cover. The film may be compressed onto the panel during the compression forming operation.

In Figure 1 there is shown a structure 20 which is particularly useful as a panel for the interior of airplanes. The structure 20 comprises at least one polymeric matrix 24 having from 20 to 50 percent by weight of nonlinear carbonaceous fibers 23 incorporated therein. The structure is formed by the application of heat and pressure. A plastic film or sheet 22, preferably MYLAR™, is provided on its upper surface. The film advantageously may be provided with a decorative embossment 21. On the other side of the matrix 24 there may be provided a stiffening member 25 which may be in the form of a screen, grate, or the like. The use of the stiffening member is dependent upon several factors including the type of resin, the amount of fiber content and the environment in which the structure is utilized. A wool-like fluff 26 of nonlinear and/or linear carbonaceous fibers which is covered by a metal foil or sheet 28 may be provided for additional fire blocking as well as thermal and sound insulation. The composite may be prepared by enclosing the wool-like fluff of carbonaceous fibers between two sheets of a polymeric material, heating the sheets to the softening point of the polymer and subjecting the composite to compressive forces of about several hundred to several thousand pounds per square feet depending upon the thickness of the composite desired and the utilization contemplated.

The preferred polymeric resins for forming airplane panel structures are the commercial polyesters such as polyethylene sold by Eastman Chemical products under the trademark KODEL™ 410, 411 and 431 (a trademark of Eastman Chemical), and DACRON™ 262 and 124W (a trademark of E.I. du Pont De Nemours & Co., Inc.).

The carbonaceous fibers of the present invention may be blended with other polymeric fibers. Examples of the other reinforcing and/or conductive fibers that may be used include other carbonaceous or carbon fibers, cotton, wool, polyester, polyolefin, nylon, rayon,. asbestos, glass fibers, fibers of silica, silica alumina, potassium titanate, silicon carbide, silicon nitride, boron nitride, boron, acrylic fibers, tetrafluoroethylene fibers, polyamide fibers, vinyl fibers, protein fibers, ceramic fibers such as aluminum silicate, and oxide fibers such as boron oxide, thoria and zirconia.

Once the fibers or fibers assemblies are produced they can be incorporated into the polymer resin matrix to produce various composite structures in substantially any fabricated form. For example, the fiber/polymer composite structure of the present invention may be in the form of a sheet having a thickness of from 6 to 12 mm thickness, or a three-dimensionally shaped article.

Many combinations of composites and structures are possible in this invention. The compositions prepared for a specific application will depend on the mechanical properties desired by the end-user.

The fiber preferred in this invention are those with maximum elongation, a carbon content of less than 85 percent and an electrical resistance of less than 4 x 10³ ohms/cm.

It is advantageous that the length of individual fibers be in the range of from 0.5 to 20 mm, preferably, from 2 to 10 mm. If the length is less than 0.5 mm, the strength of the composite is lowered to an unsatisfactory level due to an excessively small aspect ratio (1/d) of the fibers. The diameter of the carbon fibers of the invention preferably have diameters ranging from 2 to 20 microns, more preferably from 4 to 12 microns.

The structures of the present invention, advantageously contain the carbonaceous fibers all along the outside surface of the panels. It has been surprisingly found that when the panels are in direct contact with flames the fibers will puff out or extend out of the panel and form a flame shield. The panel can comprise one or more plies of compressed composites that are joined together adhesively or by further compression forming. The outside of the pan may have attached or connected a layer of a wool-like fluff or batting of fibrous material as a sound and thermal barrier.

The three-dimensionally shaped composite structures of this invention can be made substantially more readily than heretofore using standard compression techniques known in the art. When the longer, more flexible carbonaceous fibers of the present invention are incorporated into thermoplastic and thermosetting resin systems, the flexible fibers will process at much greater lengths than traditional staple carbon fibers and consequently, the composite material will have higher strengths at equivalent fibers loadings, and the ability to bend in a tighter arc (shape angle) than other reinforced carbon composite systems. It is believed that the coil-like or sinusoidal shaped carbonaceous fibers allow the fibers increased processability as compared to other straight fibers.

Depending on the particular purpose for which the composite material of this invention is to be used, if desired the composite may include additives such as fillers, pigments, fire retardants, biostabilizers (A) light stabilizers, and antioxidants. Specific examples of the above additives are calcium carbonate, calcium silicate, silica, alumina, carbon black, and the titanium oxide.

### Example 4

Following the procedure of Example 1 similar tests were performed on panels having a thickness of from 3 to 5 mm and prepared according to the results as shown in the following table.

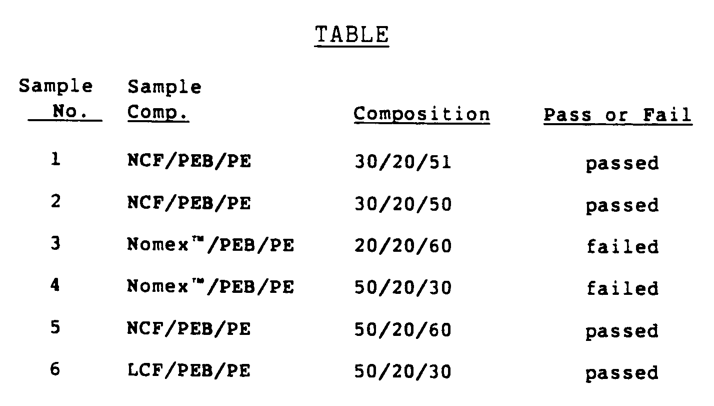

### Example 5

Following the procedure of Example 1 the Ohio State Burn Test was performed wherein a standard foam which is used in airplane upholstery as described in FAR 25.8953 appendix F Part 25 was covered with panels of the invention and subjected to direct flame.

The results are as follows:

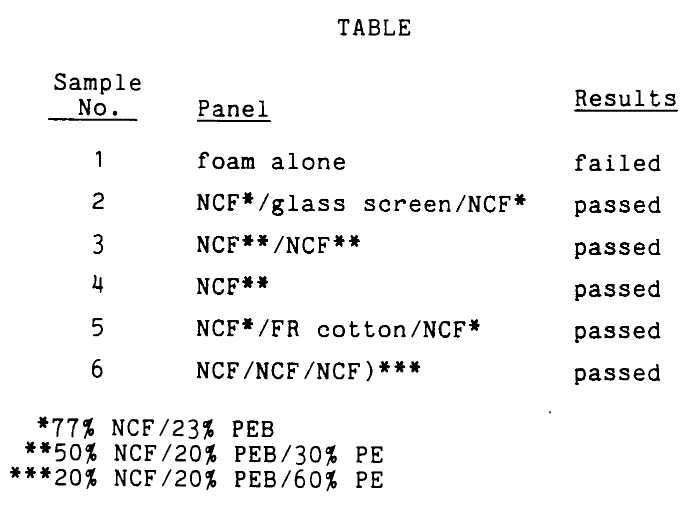

In accordance with the present invention there is also provided a lightweight, flame retarding and flame shielding or blocking fabric covering for structures such as polymeric foam seat cushions, mattress paddings, and the like. Such covering comprises a blend of from 15 to 75 percent by weight of linear and/or nonlinear carbonaceous fibers and a polymeric material, preferably polymeric fibers. The carbonaceous fibers have a carbon content of at least 65 percent, an electrical resistance of greater than 4 x 10³ ohms/cm and a specific resistivity of greater than 10⁻¹ ohms/cm. The fabric covering advantageously comprises an intimate blend of a suitable polymeric binder, preferably a polyester, and the carbonaceous fibers. The nonlinear fibers have been found to be more advantageous since they provide greater porosity which inhibits the spread of fire as compared to linear carbonaceous fibers.

Furthermore, it has been surprisingly found that the carbonaceous fibers when intimately blended with a polyester provide for a synergistic effect with respect to fire blocking and fire retarding properties of the fabric covering. It was also discovered that any molten polymeric foam such as, for example, a urethane foam from a seat cushion, was contained by the covering even when intense heat and flame was applied to the covered cushion. The fabric structure of the invention is especially used to prevent the sideways propagation of fire.

The polymeric binders utilized in the covering comprises any of the conventionally used thermal bonding fibers such as KODEL™ 410 (a trademark of Eastman Chemical), a polyethylene binder having a flow point of 8 denier at 88°C; DACRON™ D171W (a trademark of E.I. du Pont de Nemours & Co., Inc.): PRIMACOR™ 400 (a trademark of The Dow Chemical Company) for low melting polyethylene acrylic acid copolymer fibers, and the like. Polymeric binders of the invention generally have a melt temperature of less than about 250°F.

### Example 6

Flammability tests were conducted in accordance with FFA approved, "Airline Fabricare Flame Blocking Test Procedures," dated January 9, 1985.

To pass this test the average percentage weight loss may not exceed 10 percent, the char length (burn across) must be less than 17 (34 cm), and at least two of the three specimens must pass the tests in all respects.

A. A standard HR fire resistant urethane foam having a density of 1.6 lb/ft³ (25.6 kg/m³) was covered with a standard blocking layer 4 oz/yd² (0.136 kg/m²) and a nonwoven fabric consisting of 20 percent carbonaceous fibers and 80 percent polyester binder composed of a 3:1 ratio of high melt polyester binder to low melt polyester binder. The cushions were conditioned for 24 hours and the flames were set for 2 minutes.

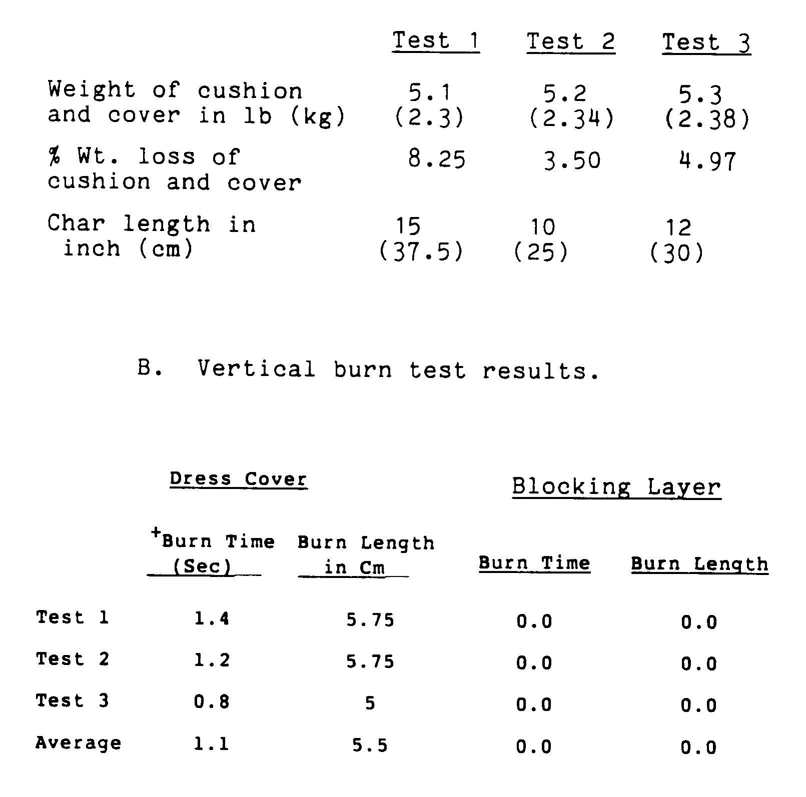

### Conclusions

All specimens passed the test.

## Claims

1. A fire retarding and fire blocking structure comprising a blend of a polymeric material and nonflammable, substantially irreversibly heat set, carbonaceous fibers having an LOI value of greater than 40 and a specific resistivity of greater than 10⁻¹ ohms/cm, and wherein said carbonaceous fibers are present in said blend in an amount of at least 7.5 percent.

2. The structure of Claim 1, wherein said carbonaceous fibers are linear fibers and comprise at least 15 percent of said blend.

3. The structure of Claim 1, wherein said carbonaceous fibers are nonlinear, resilient, shape reforming and elongatable, and have a reversible deflection ratio of greater than 1.2:1 and an aspect ratio of greater than 10:1.

4. The structure of Claims 1, 2 or 3, wherein said carbonaceous fibers are in the form of a wool-like fluff or batting and have a bulk density of from 6.4 to 96 kg/m³.

5. The structure of any one of the preceding claims, wherein said carbonaceous fibers are derived from stabilized polymeric precursor fibers or pitch based fibers having a diameter of from 4 to 25 microns.

6. The structure of Claim 5, wherein said precursor fibers are selected from acrylonitrile homopolymers, acrylonitrile copolymers or acrylonitrile terpolymers, wherein said copolymers and terpolymers contain at least 85 mole percent acrylic units and up to 15 mole percent of one or more monovinyl units copolymerized with another polymer.

7. The structure of any one of the preceding claims, wherein polymeric material comprises natural fibers selected from cotton, wool, flax, silk, and mixtures thereof, or synthetic fibers selected from cellulose, polyester, polyolefin, aramide, acrylic, fluoroplastic, polyamide, polyvinyl alcohol, or mixtures thereof.

8. The structure of any one of the preceding claims, wherein said carbonaceous fibers are electrically nonconductive or do not possess any electrostatic dissipating characteristics, said fibers having a carbon content of greater than 65 percent but less than 85 percent, an electrical resistance of greater than 4 x 10⁶ ohms/cm, and a specific resistivity of greater than 10⁻¹ ohms/cm.

9. The structure of any one of Claims 1 to 7, wherein said carbonaceous fibers have a low electrical conductivity and electrostatic dissipating characteristics and have a carbon content of greater than 65 percent but less than 85 percent, and an electrical resistance of from 4 x 10⁶ to 4 x 10³ ohms/cm.

10. The structure of any one of Claims 1 to 7, wherein said carbonaceous fibers are electrically conductive and have a carbon content of greater than 85 percent, a nitrogen content of less than 5 percent, an electrical resistance of less than 4 x 10³ ohms/cm, and a specific resistivity of less than 10⁻¹ ohms/cm.

11. The structure of any one of the preceding claims, wherein said polymeric material is a thermoplastic binder having a softening temperature of less than 450°C, and said blend comprises from 25 to 75 percent of said carbonaceous fibers.

12. The structure of Claim 11, wherein said polymeric binder is selected from polyolefins, PVC or polyesters.

13. A covering for a polymeric foam structure comprising a blend of a polymeric material and from 15 to 75 percent nonflammable, substantially irreversibly heat set, carbonaceous fibers having an LOI value of greater than 40 and a specific resistivity of greater than 10⁻¹ ohms/cm.

14. A woven or nonwoven fabric comprising a blend of a polymeric material and from 7.5 to 40 percent nonflammable, substantially irreversibly heat set carbonaceous fibers having an LOI value of greater than 40 and a carbon content of greater than 65 percent.

15. A clothing article comprising a blend of a polymeric material and from 7.5 to 20 percent nonflammable, substantially irreversibly heat set carbonaceous fibers having an LOI value of greater than 40, a specific resistivity of greater than 10⁻¹ ohms/cm, and an electrical resistance of greater than 4 x 10⁶ ohms/cm.

16. A fire shield comprising a blend of a polymeric material and from 7.5 to 80 percent nonflammable, substantially irreversibly heat set carbonaceous fibers having an LOI value of greater than 40 and a carbon content of greater than 65 percent.

17. A fire retarding and fire blocking structure comprising a blend of a polymeric material and carbonaceous fibers, wherein said carbonaceous fibers are substantially graphitic, are irreversibly heat set, nonlinear, resilient, shape reforming and elongatable, have a reversible deflection ratio of greater than 1.2:1, an aspect ratio of greater than 10:1, an LOI value of greater than 40, an electrical resistance of less than 4 x 10³ ohms/cm and a specific resistivity of less than 10⁻¹ ohms/cm, and wherein said carbonaceous fibers are present in the blend in an amount of greater 20 percent.

18. A fire blocking panel comprising a compression formed composite of a thermoplastic or thermosetting resin matrix containing from 10 to 95 percent by weight of nonflammable, substantially irreversibly heat set carbonaceous fibers having an LOI value of greater than 40 and a carbon content of greater than 65 percent.

19. The structural panel of Claim 18, wherein said fibers are nonlinear, resilient, shape reforming and elongatable and have a reversible deflection ratio of greater than 1.2:1 and an aspect ratio of greater than 10:1, wherein said fibers are in the form of a batting or a wool-like fluff prior to compression.

20. The panel of Claim 19, including a layer of sound and thermal insulation on at least one surface of the panel, said insulation comprising a batting of said carbonaceous fibers.

21. The panel of Claim 18, 19 or 20, including a film or sheet of a polymeric material attached to at least one surface of the panel.

22. A method of making a fire shield for a structural part comprising the steps of providing a layer of an intimate blend of a polymeric material and at least 7.5 percent nonflammable, substantially irreversibly heat set carbonaceous fibers having a carbon content of greater than 65 percent, a nitrogen content of from 5 to 35 percent, and an LOI value greater than 40.

23. The method of Claim 22, including the step of placing said layer between a pair of structural parts.

24. The method of Claim 22 or 23, wherein said carbonaceous fibers are linear and comprise at least 15 percent of said blend.

25. A method for improving the flame retarding and fire blocking characteristics of a fiber tow which comprises blending into said fiber tow at least 7.5 percent of nonflammable, substantially irreversibly heat set carbonaceous fibers having a carbon content of greater than 65 percent, a nitrogen content of from 5 to 35 percent, and an LOI value greater than 40.

26. The method of Claim 25, wherein said carbonaceous fibers are nonlinear and are derived from stabilized acrylic fibers.

## Patentansprüche

1. Feuerhemmende und feuerblockierende Struktur, umfassend ein Gemisch eines Polymermaterials und nicht-entflammbaren, im wesentlichen irreversibel heißfixierten, kohlenstoffhaltigen Fasern mit einem LOI-Wert von mehr als 40 und einem spezifischen Widerstand von mehr als 10⁻¹ Ohm/cm und worin die kohlenstoffhaltigen Fasern im Gemisch in einem Anteil von mindestens 7,5 % vorhanden sind.

2. Struktur nach Anspruch 1, worin die kohlenstoffhaltigen Fasern lineare Fasern sind und mindestens 15 % des Gemisches bilden.

3. Struktur nach Anspruch 1, worin die kohlenstoffhaltigen Fasern nicht-linear, flexibel, die Gestalt verformend und dehnbar sind und ein reversibles Auslenkungsverhältnis von mehr als 1,2 : 1 und ein Aspektverhältnis von mehr als 10 : 1 besitzen.

4. Struktur nach einem der Ansprüche 1, 2 oder 3, worin die kohlenstoffhaltigen Fasern in Form eines wolleartigen Flaums oder einer Watte sind und eine Massendichte von 6,4 bis 96 kg/m³ besitzen.

5. Struktur nach einem der vorhergehenden Ansprüche, worin die kohlenstoffhaltigen Fasern aus stabilisierten polymeren Vorstufenfasern oder Fasern auf Pechbasis mit einem Durchmesser von 4 bis 25 Mikron stammen.

6. Struktur nach Anspruch 5, worin die Vorstufenfasern aus Acrylnitril-Homopolymeren, Acrylnitril-Copolymeren oder Acrylnitril-Terpolymeren ausgewählt sind, worin die Copolymere und Terpolymere mindestens 85 Mol-% Acryleinheiten und bis zu 15 Mol-% von einer oder mehreren mit einem anderen Polymer copolymerisierten Monovinyleinheiten enthalten.

7. Struktur nach einem der vorhergehenden Ansprüche, worin das Polymermaterial Naturfasern, ausgewählt aus Baumwolle, Wolle, Flachs, Seide und Gemischen davon, oder synthetische Fasern, ausgewählt aus Cellulose, Polyester, Polyolefin, Aramid, Acryl, Fluorcarbonplast, Polyamid, Polyvinylalkohol oder Gemischen davon, umfaßt.

8. Struktur nach einem der vorhergehenden Ansprüche, worin die kohlenstoffhaltigen Fasern nicht elektrisch leitfähig sind oder keine elektrostatischen Ableitungseigenschaften besitzen, wobei die Fasern einen Kohlenstoffgehalt von mehr als 65 %, aber weniger als 85 %, einen elektrischen Widerstand von mehr als 4 x 10⁶ Ohm/cm und einen spezifischen Widerstand von mehr als 10⁻¹ Ohm/cm besitzen.

9. Struktur nach einem der Ansprüche 1 bis 7, worin die kohlenstoffhaltigen Fasern eine geringe elektrische Leitfähigkeit und geringe elektrostatische Ableitungseigenschaften haben und einen Kohlenstoffgehalt von mehr als 65 %, aber weniger als 85 % und einen elektrischen Widerstand von 4 x 10⁶ bis 4 x 10³ Ohm/cm besitzen.

10. Struktur nach einem der Ansprüche 1 bis 7, worin die kohlenstoffhaltigen Fasern elektrisch leitfähig sind und einen Kohlenstoffgehalt von mehr als 85 %, einen Stickstoffgehalt von weniger als 5 %, einen elektrischen Widerstand von weniger als 4 x 10³ Ohm/cm und einen spezifischen Widerstand von weniger als 10⁻¹ Ohm/cm besitzen.

11. Struktur nach einem der vorhergehenden Ansprüche, worin das Polymermaterial ein thermoplastischer Binder mit einer Erweichungstemperatur von weniger als 450°C ist und das Gemisch von 25 bis 75 % der kohlenstoffhaltigen Fasern umfaßt.

12. Struktur nach Anspruch 11, worin der Polymerbinder aus Polyolefinen, PVC oder Polyestern ausgewählt ist.

13. Überzug für eine polymere Schaumstoffstruktur, umfassend ein Gemisch eines Polymermaterials und von 15 bis 75 % nicht-entflammbaren, im wesentlichen irreversibel heißfixierten, kohlenstoffhaltigen Fasern mit einem LOI-Wert von mehr als 40 und einem spezifischen Widerstand von mehr als 10⁻¹ Ohm/cm.

14. Gewebter oder nicht-gewebter Stoff, umfassend ein Gemisch eines Polymermaterials und von 7,5 bis 40 % nicht-entflammbaren, im wesentlichen irreversibel heißfixierten, kohlenstoffhaltigen Fasern mit einem LOI-Wert von mehr als 40 und einem Kohlenstoffgehalt von mehr als 65 %.

15. Kleidungsgegenstand, umfassend ein Gemisch eines Polymermaterials und von 7,5 bis 20 % nicht-entflammbaren, im wesentlichen irreversibel heißfixierten, kohlenstoffhaltigen Fasern mit einem LOI-Wert von mehr als 40, einem spezifischen Widerstand von mehr als 10⁻¹ Ohm/cm und einem elektrischen Widerstand von mehr als 4 x 10⁶ Ohm/cm.

16. Feuerabschirmung, umfassend ein Gemisch eines Polymermaterials und von 7,5 bis 80 % nicht-entflammbaren, im wesentlichen irreversibel heißfixierten, kohlenstoffhaltigen Fasern mit einem LOI-Wert von mehr als 40 und einem Kohlenstoffgehalt von mehr als 65 %.

17. Feuerhemmende und feuerblockierende Struktur, umfassend ein Gemisch eines Polymermaterials und kohlenstoffhaltiger Fasern, worin die kohlenstoffhaltigen Fasern im wesentlichen graphitisch sind, irreversibel heißfixiert, nicht-linear, flexibel, die Gestalt verformend und dehnbar sind, ein reversibles Auslenkungsverhältnis von mehr als 1,2 : 1, ein Aspektverhältnis von mehr als 10 : 1, einen LOI-Wert von mehr als 40, einen elektrischen Widerstand von weniger als 4 x 10³ Ohm/cm und einen spezifischen Widerstand von weniger als 10⁻¹ Ohm/cm besitzen und worin die kohlenstoffhaltigen Fasern im Gemisch in einem Anteil von mehr als 20 % vorhanden sind.

18. Feuerblockierende Platte, umfassend einen druckgeformten Verbundstoff aus einer thermoplastischen oder thermofixierenden Harzmatrix, umfassend von 10 bis 95 Gew.-% nicht-entflammbare, im wesentlichen irreversibel heißfixierte, kohlenstoffhaltige Fasern mit einem LOI-Wert von mehr als 40 und einem Kohlenstoffgehalt von mehr als 65 %.

19. Plattenstruktur nach Anspruch 18, worin die Fasern nicht-linear, flexibel, die Gestalt verformend und dehnbar sind und reversibles Auslenkungsverhältnis von mehr als 1,2 : 1 und ein Aspektverhältnis von mehr als 10 : 1 besitzen, worin die Fasern vor dem Pressen in Form einer Watte oder eines wolleartigen Flaums sind.

20. Platte nach Anspruch 19, umfassend eine Schicht aus Schall- und Wärmeisolierung auf mindestens einer Oberfläche der Platte, wobei die Isolierung eine Watte der kohlenstoffhaltigen Fasern umfaßt.

21. Platte nach Anspruch 18, 19 oder 20, einschließlich eines an mindestens einer Oberfläche der Platte angebrachten Films oder Blatts eines Polymermaterials.

22. Verfahren zur Herstellung einer Feuerabschirmung für ein Strukturteil, umfassend die Schritte des Bereitstellens einer Schicht eines innigen Gemisches aus einem Polymermaterial und mindestens 7,5 % nicht-entflammbaren, im wesentlichen irreversibel heißfixierten, kohlenstoffhaltigen Fasern mit einem Kohlenstoffgehalt von mehr als 65 %, einem Stickstoffgehalt von 5 bis 35 % und einem LOI-Wert von mehr als 40.

23. Verfahren nach Anspruch 22, umfassend den Schritt des Legens der Schicht zwischen ein Paar Strukturteile.

24. Verfahren nach Anspruch 22 oder 23, worin die kohlenstoffhaltigen Fasern linear sind und mindestens 15 % des Gemisches bilden.

25. Verfahren zur Verbesserung der feuerhemmenden und feuerblockierenden Eigenschaften eines Faserkabels, umfassend das Einmischen von mindestens 7,5 % nicht-entflammbaren, im wesentlichen irreversibel heißfixierten, kohlenstoffhaltigen Fasern mit einem Kohlenstoffgehalt von mehr als 65 %, einem Stickstoffgehalt von 5 bis 35 % und einem LOI-Wert von mehr als 40 in das Faserkabel.

26. Verfahren nach Anspruch 25, worin die kohlenstoffhaltigen Fasern nicht-linear sind und aus stabilisierten Acrylfasern stammen.

## Revendications

1. Structure ignifugée et anti-feu contenant un mélange d'un matériau polymère et de fibres carbonées non inflammables, sensiblement irréversiblement thermostabilisées, ayant une valeur de l'indice IOL supérieure à 40 et une résistivité spécifique supérieure à 10⁻¹ Ω.cm, dans laquelle lesdites fibres carbonées constituent au moins 7,5 % dudit mélange.

2. Structure selon la revendication 1, dans laquelle lesdites fibres carbonées sont des fibres rectilignes et constituent au moins 15 % dudit mélange.

3. Structure selon la revendication 1, dans laquelle lesdites fibres carbonées sont non rectilignes, élastiques, allongeables, reprennent leur forme, et ont un rapport de déformation réversible supérieur à 1,2:1 ainsi qu'un rapport d'allongement supérieur à 10:1.

4. Structure selon la revendication 1, 2 ou 3, dans laquelle lesdites fibres carbonées ont la forme d'un fluff semblable à de la laine ou d'une ouate en feuille et ont une densité en vrac comprise entre 6,4 et 96 kg/m³.

5. Structure selon l'une quelconque des précédentes revendications, dans laquelle lesdites fibres carbonées dérivent de fibres formant précurseur en polymère stabilisé ou bien de fibres à base de brai ayant un diamètre compris entre 4 et 25 microns.

6. Structure selon la revendication 5, dans laquelle lesdites fibres précurseurs sont choisies parmi les homopolymères d'acrylonitrile, les copolymères d'acrylonitrile ou les terpolymères d'acrylonitrile, dans laquelle lesdits copolymères et terpolymères contiennent au moins 85 % en moles de motifs acryliques et jusqu'à 15 % en moles d'un ou plusieurs motifs monovinyle copolymérisés avec un autre polymère.

7. Structure selon l'une quelconque des précédentes revendications, dans laquelle le matériau polymère contient des fibres naturelles choisies parmi le coton, la laine, le lin, la soie, et des mélanges de ceux-ci, ou bien des fibres synthétiques choisies parmi la cellulose, le polyester, la polyoléfine, l'aramide, l'acrylique, le plastique fluoré, les polyamides, l'alcool polyvinylique, ou des mélanges de ceux-ci.

8. Structure selon l'une quelconque des précédentes revendications, dans laquelle lesdites fibres carbonées sont électriquement non conductrices ou ne possèdent aucune caractéristique de dissipation de l'électricité statique, lesdites fibres ayant une teneur en carbone supérieure à 65 % mais inférieure à 85 %, une résistance électrique supérieure à 4 x 10⁶ Ω/cm, et une résistivité spécifique supérieure à 10⁻¹ Ω.cm.

9. Structure selon l'une quelconque des revendications 1 à 7, dans laquelle lesdites fibres carbonées ont une conductivité électrique faible et des caractéristiques de dissipation de l'électricité statique et ont une teneur en carbone supérieure à 65 % mais inférieure à 85 %, et une résistance électrique comprise entre 4 x 10⁶ et 4 x 10³ Ω/cm.

10. Structure selon l'une quelconque des revendications 1 à 7, dans laquelle lesdites fibres carbonées sont électroconductrices et ont une teneur en carbone supérieure à 85 %, une teneur en azote inférieure à 5 %, une résistance électrique inférieure à 4 x 10³ Ω/cm, et une résistivité spécifique inférieure à 10⁻¹ Ω.cm.

11. Structure selon l'une quelconque des précédentes revendications, dans laquelle ledit matériau polymère est un liant thermoplastique ayant une température de ramollissement inférieure à 450°C, et ledit mélange contient de 25 à 75 % de fibres carbonées.

12. Structure selon la revendications 11, dans laquelle ledit liant polymère est choisi parmi les polyoléfines, le PVC ou les polyesters.

13. Revêtement pour structure en mousse de polymère contenant un mélange d'un matériau polymère et de 15 à 75 % de fibres carbonées non inflammables, sensiblement irréversiblement thermostabilisées, ayant une valeur de l'indice IOL supérieure à 40 et une résistivité spécifique supérieure à 10⁻¹ Ω.cm.

14. Tissu tissé ou non tissé contenent un mélange d'un matériau polymère et de 7,5 à 40 % de fibres carbonées non inflammables, sensiblement irréversiblement thermostabilisées, ayant une valeur de l'indice IOL supérieure à 40 et une teneur en carbone supérieure à 65 %.

15. Article de vêtement contenant un mélange d'un matériau polymère et de 7,5 à 20 % de fibres carbonées non inflammables, sensiblement irréversiblement thermostabilisées, ayant une valeur de l'indice IOL supérieure à 40, une résistivité spécifique supérieure à 10⁻¹ Ω.cm, et une résistance électrique supérieure à 4 x 10⁶ Ω/cm.

16. Ecran pare-feu contenant un mélange d'un matériau polymère et de 7,5 à 80 % de fibres carbonées non inflammables, sensiblement irréversiblement thermostabilisées, ayant une valeur de l'indice IOL supérieure à 40 et une teneur en carbone supérieure à 65 %.

17. Structure ignifugée et anti-feu contenant un mélange d'un matériau polymère et de fibres carbonées, dans laquelle lesdites fibres carbonées sont essentiellement graphitiques, sont irréversiblement thermostabilisées, non rectilignes, élastiques, allongeables et reprennent leur forme, ont un rapport de déformation réversible supérieur à 1,2:1, un rapport d'allongement supérieur à 10:1, une valeur de l'indice IOL supérieure à 40, une résistance électrique inférieure à 4 x 10³ Ω/cm et une résistivité spécifique inférieure à 10⁻¹ Ω.cm, et dans laquelle lesdites fibres carbonées constituent plus de 20 % du mélange.

18. Panneau anti-feu contenant un composite formé par compression d'une matrice en résine thermoplastique ou thermodurcissable contenant de 10 à 95 % en poids de fibres carbonées non inflammables, sensiblement irréversiblement thermostabilisées, ayant une valeur de l'indice IOL supérieure à 40 et une teneur en carbone supérieure à 65 %.

19. Panneau mural selon la revendication 18, dans lequel lesdites fibres sont non rectilignes, élastiques, allongeables, reprennent leur forme, et ont un rapport de déformation réversible supérieur à 1,2:1 et un rapport d'allongement supérieur à 10:1, dans lequel lesdites fibres ont, avant la compression, la forme d'une ouate en feuille ou d'un fluff semblable à de la laine.

20. Panneau selon la revendication 19, incluant une couche d'isolation thermique et sonore sur au moins une surface du panneau, ladite isolation contenant une ouate en feuille faite desdites fibres carbonées.

21. Panneau selon la revendication 18, 19 ou 20, incluant une feuille ou un film de matériau polymère fixé à au moins une surface du panneau.

22. Procédé de fabrication d'un écran anti-feu pour une pièce de construction comportant les étapes de fabrication d'une couche d'un mélange intime de matériau polymère et d'au moins 7,5 % de fibres carbonées non inflammables, sensiblement irréversiblement thermostabilisées, ayant une teneur en carbone supérieure à 65 %, une teneur en azote comprise entre 5 et 35 % et une valeur de l'indice IOL supérieure à 40.

23. Procédé selon la revendication 22, incluant l'étape consistant à placer ladite couche entre une paire d'éléments de construction.

24. Procédé selon la revendication 22 ou 23, dans lequel lesdites fibres carbonées sont rectilignes et constituent au moins 15 % dudit mélange.

25. Procédé pour améliorer les caractéristiques d'ingnifugation et anti-feu d'un cordage en fibres qui comporte le mélange dans ledit cordage en fibres d'au moins 7,5 % de fibres carbonées non inflammables, sensiblement irréversiblement thermostabilisées, ayant une teneur en carbone supérieure à 65 %, une teneur en azote comprise entre 5 et 35 % et une valeur de l'indice IOL supérieure à 40.

26. Procédé selon la revendication 25, dans lequel lesdites fibres carbonées sont non rectilignes et dérivent de fibres acryliques stabilisées.
